(19) Europäisches Patentamt
European Patent Office
Office européen des brevets

(11) Veröffentlichungsnummer : **0 224 026**
**B1**

(12) **EUROPÄISCHE PATENTSCHRIFT**

(45) Veröffentlichungstag der Patentschrift :
21.12.88

(51) Int. Cl.⁴ : **B 01 D 11/02**

(21) Anmeldenummer : **86114595.1**

(22) Anmeldetag : **21.10.86**

(54) Verfahren und Anlage zur abwasserfreien Feststoffextraktion mit organischen Lösemitteln.

(30) Priorität : 31.10.85 DE 3538745

(43) Veröffentlichungstag der Anmeldung :
03.06.87 Patentblatt 87/23

(45) Bekanntmachung des Hinweises auf die Patenterteilung : 21.12.88 Patentblatt 88/51

(84) Benannte Vertragsstaaten :
BE DE ES FR GB GR IT NL

(56) Entgegenhaltungen :
DE—A— 3 219 036
DE—B— 1 038 527
US—A— 3 855 079
Die Akte enthält technische Angaben, die nach dem
Eingang der Anmeldung eingereicht wurden und die
nicht in dieser Patentschrift enthalten sind.

(73) Patentinhaber : **Extraktionstechnik Gesellschaft für
Anlagenbau m.b.H.
Humboldtstrasse 56 Postfach 76 03 69
D-2000 Hamburg 76 (DE)**

(72) Erfinder : **Weber, Klaus
Richterstrasse 13
D-2000 Hamburg 76 (DE)**

(74) Vertreter : **Planker, Karl-Josef, Dipl.-Phys.
c/o Deutsche Babcock Anlagen AG Parkstrasse 29
Postfach 4 + 6
D-4150 Krefeld 11 (DE)**

EP 0 224 026 B1

Jouve, 18, rue St-Denis, 75001 Paris, France

## Beschreibung

Die Erfindung betrifft ein Verfahren zur abwasserfreien Feststoffextraktion mit organischen Lösemitteln gemäß dem Obergriff des Patentanspruchs 1 und eine Anlage zur Durchführung des Verfahrens gemäß dem Obergriff des Patentanspruchs 6.

Extraktionsverfahren mit organischen Lösemitteln werden zur Gewinnung von Rohstoffen aus festen Rohmaterialien eingesetzt. Wichtige Anwendungsgebiete sind die Ölgewinnung aus Ölsaaten, die Hopfenextraktion und die Gewinnung von pharmazeutischen Rohstoffen. Als Lösemittel werden organische Flüssigkeiten verwendet, die sich destillativ sowohl vom Extrakt als auch vom extraktarmen Rückstand abtrennen lassen ; großtechnisch werden z. B. Hexan, Heptan, Dichlormethan und andere Halogenkohlenwasserstoffe, sowie verschiedene Alkohole eingesetzt.

Nach dem Extraktionsvorgang wird das Lösemittel sowohl aus dem extraktarmen Rückstand (Schrot) als auch aus dem Lösemittel/Extrakt-Gemisch (Miscella) vollständig abgetrennt und wieder verwendet. Zur Lösemittelabtreibung wird heißer Wasserdampf im Gegenstrom durch das Schrot geleitet. Das Lösemittel verdampft und wird mit dem Wasserdampf ausgetragen. Zur Verwendung kommt dabei Frischdampf, der aus einer Dampfschiene abgezogen wird. In Anlagen zur Gewinnung von Speiseölen oder -fetten werden die Schrotbehandlungsvorrichtungen als Desolventizer-Toaster (DT) bezeichnet. In ihnen wird gleichzeitig mit der Lösemittelabtreibung das Schrot zur Weiterverwendung (z. B. als Futtermittel) aufbereitet.

Die wasser- und lösemittelhaltigen Brüden werden kondensiert, anschließend wird das Lösemittel abgetrennt, und das verbleibende Abwasser verläßt die Extraktionsanlage. Das Abwasser enthält organische Substanzen. Es stellt daher, wenn es nicht abwassertechnisch behandelt wird, eine Belastung der Umwelt dar.

Aus der Miscella wird das Lösemittel durch Verdampfen und Strippen mit Wasserdampf abgetrennt. Die dabei entstehenden Brüden werden ebenfalls kondensiert, das Lösemittel wird aus dem Kondensat abgetrennt und das verbleibende Abwasser aus der Anlage ausgetragen.

Weiterhin fällt Abwasser bei der Reinigung der Abluft an, die insbesondere bei der Extraktion frei wird. Die lösemittelhaltige Abluft wird durch einen Ölwäscher mit Mineralöl gereinigt. Die Regeneration des Mineralöls i. e. die Abtrennung des Lösemittels — erfolgt durch Strippen mit Wasserdampf. Der lösemittelhaltige Dampf wird kondensiert und nach der Abtrennung des Lösemittels als Abwasser abgeleitet.

Zweckmäßigerweise werden die kondensierten Brüden aus der Schrot- und Miscellabehandlung und aus der Abluftreinigung gesammelt, so daß die Lösemittelabtrennung gemeinsam erfolgen kann und nur ein Abwasserstrom anfällt.

Ein gattungsgemäßes Verfahren und eine gattungsgemäße Anlage ist in dem Prospekt « Verfahrenstechnik Ölsaatenverarbeitung » der Anmelderin beschrieben.

Die Erfindung hat sich die Aufgabe gestellt, ein gattungsgemäßes Verfahren bereitzustellen, bei dem kein umweltbelastendes Abwasser anfällt. Eine weitere Aufgabe ist die Bereitstellung einer Anlage zur Durchführung eines Verfahrens nach der Erfindung.

Die erste Aufgabe wird durch das kennzeichnende Merkmal des Patentanspruchs 1 gelöst. Patentanspruch 6 löst die zweite Aufgabe.

Als weiterer Vorteil tritt hinzu, daß Extraktionsverfahren nach der Erfindung weniger energieaufwendig sind. Das zu verdampfende Abwasser weist als Folge der Lösemittelabtrennung eine Temperatur oberhalb des Siedepunktes des Lösungsmittels auf ; z. B. bei Verwendung von Hexan mehr als 68 °C. Zu seiner Verdampfung ist daher weniger Energie erforderlich als bei einer Verdampfung von Frischwasser von ca. 20 °C. Die Energieeinsparung beträgt hierbei knapp 10 %.

Die Unteransprüche enthalten bevorzugte Varianten der Erfindung und Anlagen zur Durchführung dieser Verfahren. Bei der Variante nach Anspruch 2 fällt der Rückstand aus der Abwasserverdampfung bei vielen Anwendungen pumpfähig bei möglichst hohem Feststoffgehalt an. Diese Feststoffe werden dem Schrot während der Dampfbehandlung zugegeben und mit dem behandelten Schrot ausgetragen.

Die Verfahren nach den Ansprüchen 3 bis 5 sind besonders kostengünstig. Die Maßnahmen der Patentansprüche 4 und 5 werden bei Verwendung von wasserunlöslichen Lösemitteln, die sich mit Schwerkraftabscheidern vom Wasser abtrennen lassen, eingesetzt.

Die Zeichnung dient zur Erläuterung der Erfindung.

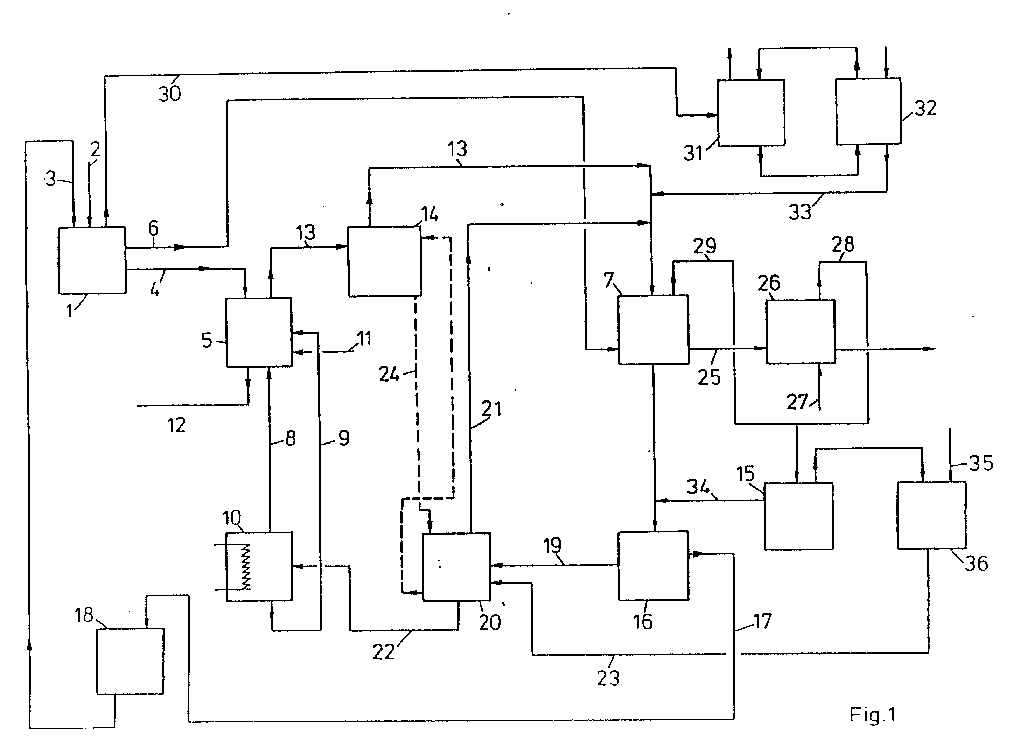

Figur 1 zeigt als Blockschaltbild grobschematisch eine Anlage nach der Erfindung.

Die Anlage ist zur kontinuierlichen Extraktion von Ölsaaten -z. B. von Sojabohnen — mit Hexan ausgelegt.

Von einem kontinuierlich arbeitenden Extrakteur 1 mit Rohmaterialeintrag 2 und Lösemittelzufuhr 3 führt eine Förderstrecke 4 für den extraktarmen Rückstand (Schrot) zu einem Desolventizer-Toaster (DT) 5 und eine Leitung 6 für die Miscella zu einem Vorverdampfer 7. In den DT 5 münden eine Dampfleitung 8 und eine Rückstandleitung 9 von einem indirekt mit Dampf beheizten Abwasserverdampfer 10. Weiterhin weist der DT 5 eine Frischdampfzufuhr 11, einen Schrotaustrag 12 und eine Brüdenleitung 13 auf, die zu einem Brüdenwäscher 14 führt. Von diesem führt die Leitung 13 durch den Vorverdampfer 7 zu einem Hexan/Wasser-Scheider 16. Vom Hexan/Wasser-Scheider 16 führt eine Leitung 17 für das Lösemittel über einen Vorlagebehälter 18 in den Extrakteur 1 zurück. Seine Abwasserleitung 19 mündet in einem Nachscheideverdampfer 20, dessen Brüdenleitung 21 an der Brüdenleitung 13 vor dem Vorverdampfer 7 angeschlossen ist und dessen Abwasserleitung 22 im Abwasserverdampfer 10 endet. Vom Nachscheideverdampfer 20, der über die Leitung 23 mit Treibdampf 35 aus einer Vakuumerzeugung 36 mit Dampfstrahlejektoren beheizt wird, wird der Brüdenwäscher 14 über eine Kreislaufleitung 24 mit Wasser versorgt.

Vom Vorverdampfer 7 führt eine Miscella-Leitung 25 durch einen nicht dargestellten Nachverdampfer zu einem Stripper 26 mit Frischdampfzufuhr 27, dessen Brüdenleitung 28 gemeinsam mit der Brüdenleitung 29 aus dem Vorverdampfer 7 an einen Kondensator 15 angeschlossen ist. Die Kondensatleitung 34 des Kondensators 15 führt zum Hexan/Wasserscheider 16.

Eine Abluftleitung 30 führt vom Extrakteur 1 durch einen Ölwäscher 31, dessen Öl in einer Strippkolonne 32 mit Wasserdampf regeneriert wird. Die Brüdenleitung 33 aus der Kolonne 32 ist ebenfalls an der Brüdenleitung 13 vor dem Vorverdampfer 7 angeschlossen.

Aus dem Extrakteur 1 wird der lösemittelhaltige Extraktionsrückstand in den Desolventizer-Toaster 5 befördert, wo im Gegenstrom Sattdampf von ca. 3 bar aus dem Abwasserverdampfer 10 durchgeleitet wird. Gleichzeitig wird Frischdampf zum Ausgleich der Wasserverluste zugegeben.

Aus den Brüden, die den DT 5 verlassen, werden mit Wasser im Brüdenwäscher 14 die mitgerissenen Feststoffteilchen ausgewaschen und in den Nachscheideverdampfer 20 eingetragen, von wo sie mit dem Abwasser in den Abwasserverdampfer 10 befördert werden. Die so gereinigten Brüden werden anschließend im Vorverdampfer 7 für die teilweise Verdampfung des Lösemittels aus der Miscella durch indirekten Wärmetausch genutzt, vorher werden die feststofffreien Brüden aus dem Nachscheideverdampfer 20 und der Abluftreinigung 31, 32 zugemischt. Der Brüdenwäscher 14 kann anstelle mit Wasser auch mit Lösemittel betrieben werden. Dies hängt von dem zu extrahierenden Rohstoff ab.

Die aus dem Extrakteur 1 abgezogene, lösemittelhaltige Abluft wird mit einer Mineralölwäsche 31 gereinigt. Das vom Öl aufgenommene Lösemittel wird anschließend durch Strippen mit Wasserdampf in der Strippkolonne 32 wieder abgetrennt. Das Dampf/Lösungsmittel-Gemisch wird den Brüden aus den DT 5 — wie vorhin angeführt — zugemischt.

Durch den Wärmeübertrag im Vorverdampfer 7 verdampft Lösemittel aus der Miscella. Die vollständige Entfernung des Lösemittels wird — nachdem in einem nicht dargestellten Nachverdampfer weiteres Lösemittel abgetrennt wurde — durch Strippen mit Wasserdampf im Stripper 26 erreicht. Der lösemittelhaltige Dampf aus dem Stripper 26 wird, ebenso wie die Brüden aus dem Vorverdampfer 7 und dem Nachverdampfer im Kondensator 15 durch Abkühlen kondensiert.

Aus dem Kondensat, das eine Temperatur von ca. 50 °C aufweist, wird anschließend im Hexan/Wasser-Scheider 16 (hier ein Schwerkraftabscheider) das Hexan abgetrennt und erneut zum Extrahieren verwendet.

Im vorliegenden Ausführungsbeispiel wird vereinfachend nur ein gemeinsamer Kondensator 15 für alle Brüden gezeigt. Bei ausgeführten Anlagen werden üblicherweise für jeden Brüdenstrom gesondert Kondensatoren eingesetzt. Die Kondensatströme werden anschließend in einem gemeinsamen Lösemittel/Wasser-Scheider gesammelt.

Das aus dem Hexan/Wasser-Scheider 16 abfließende Wasser wird mit Treibdampf aus der Vakuumerzeugung 36 im Nachscheideverdampfer 20 auf über 68 °C, im Beispiel auf ca. 75 °C aufgeheizt, um die nach der Trennung verbliebenen Lösemittelreste zu entfernen. Diese werden den Brüden aus dem DT 5 vor dem Vorverdampfer 7 zugemischt.

Im vorliegenden Beispiel wird ein wasserunlösliches Lösemitteln — Hexan — verwendet. Bei Verwendung von wasserlöslichen Lösemitteln, z. B. Alkoholen, erfolgt die Abtrennung des Lösemittels von Wasser in Destillations- oder Rektifizierkolonnen. In diesem Fall fällt das Abwasser bereits erhitzt an und die Aufheizung im Nachscheideverdampfer 20 erübrigt sich.

Das den Nachscheideverdampfer 20 verlassende Abwasser es enthält auch die im Brüdenwäscher 14 ausgewaschenen Feststoffe — wird anschließend im Abwasserverdampfer durch indirekten Wärmeübertrag mit Frischdampf bis auf einen Rest zwischen 0,4 und 1 Gew. % eingedampft. Der entstehende Dampf wird zur Lösemittelabtreibung aus dem Schrot in den DT 5 eingeblasen. Der verbleibende, noch pumpfähige Rückstand wird ebenfalls in den DT 5 zurückgeführt, so daß seine Feststoffe aus diesem mit dem Schrot ausgetragen werden.

Durch den indirekten Wärmeübertrag im Abwasserverdampfer 10 wird der aufheizende Frischdampf nicht verunreinigt. Das Kondensat kann daher unbehandelt zur erneuten Verdampfung zurückgeführt werden. In der gesamten Extraktionsanlage fällt kein Abwasser an.

Im Ausführungsbeispiel wurde die Extraktion von pflanzlichen Rohstoffen beschrieben. Die Erfindung ist ebenso zur Extraktion von tierischen Rohstoffen einsetzbar; beispielsweise bei der Knochenextraktion zur Gelantinegewinnung oder bei der Extraktion von Kohlenwasserstoffen aus Futterhefe, in beiden Anwendungen mit Hexan als Lösemittel.

**Patentansprüche**

1. Verfahren zur abwasserfreien Feststoffextraktion mit organischen Lösemitteln,

bei dem aus dem festen Extraktionsrückstand, dem Schrot, das Lösemittel durch direkten Kontakt mit Wasserdampf abgetrieben wird,

und bei dem wasser- und lösemittelhaltige Brüden kondensiert und aus dem Kondensat Lösemittel abgetrennt wird, dadurch gekennzeichnet, daß nach der Lösemittelabtrennung verbleibendes Abwasser eingedampft und der Dampf zur Lösemittelabtreibung aus dem Schrot verwendet wird.

2. Verfahren nach Anspruch 1, dadurch gekennzeichnet, daß das Abwasser bis auf 0,4-1 Gew. % eingedampft wird, und daß der Verdampfungsrückstand dem Schrot während der Dampfbehandlung zugegeben wird.

3. Verfahren nach Anspruch 1 oder 2, dadurch gekennzeichnet, daß die Verdampfung durch indirekten Wärmeübertrag aus Frischdampf durchgeführt wird.

4. Verfahren nach einem der Ansprüche 1 bis 3 mit wasserunlöslichen Lösemitteln, dadurch gekennzeichnet, daß das Abwasser vor dem Verdampfen in einer getrennten Stufe auf eine Temperatur zwischen der Siedetemperatur des Lösungsmittels und 100 °C erhitzt wird.

5. Verfahren nach Anspruch 4 bei dem Dampfstrahlejektoren zur Vakuumerzeugung eingesetzt werden, dadurch gekennzeichnet, daß der Treibdampf der Dampfstrahlejektoren (36) in das Abwasser eingeleitet wird.

6. Anlage zur Durchführung eines der Verfahren nach Anspruch 1 bis 5,
- mit einem Lösemittelabtreiber zum Abtreiben des Löungsmittels aus dem Schrot,
- einer Vorrichtung zum Kondensieren von Lösemittelhaltigen Brüden und
- einer Vorrichtung zum Trennen von Lösemittel und Wasser,
gekennzeichnet durch einen der Vorrichtung (16) zum Trennen von Lösemittel und Wasser nachgeschalteten Abwasserverdampfer (10) und eine Dampfleitung (8), die vom Abwasserverdampfer (10) in den Lösemittelabtreiber (5) führt.

7. Anlage nach Anspruch 6, gekennzeichnet durch eine Rückstandsförderstrecke (9) vom Abwasserverdampfer (10) zum Lösemittelabtreiber (5).

8. Anlage nach Anspruch 6 oder 7, gekennzeichnet durch einen indirekt mit Dampf beheizten Abwasserverdampfer (10).

9. Anlage nach einem der Ansprüche 6 bis 8, gekennzeichnet durch einen Nachscheideverdampfer (20) zwischen der Lösemittel/Wasser-Trennvorrichtung (16) und Abwasserverdampfer (10).

## Claims

1. Process for extracting solids by means of organic solvents without obtaining waste water,
wherein the solvent is removed from the solid extraction residue, the scrap, by direct contact with water vapour,
and wherein vapours containing water and solvent are condensed and solvent is separated out of the condensate,
characterised in that waste water remaining after separation of the solvent is evaporated and the steam is used to remove solvent from the scrap.

2. Process according to Claim 1, characterised in that the waste water is evaporated to 0.4-1 % by weight, and in that the evaporation residue is added to the scrap during the steam treatment.

3. Process according to Claim 1 or 2, characterised in that the evaporation is conducted by indirect heat transfer from fresh steam.

4. Process according to one of Claims 1 to 3 with waterinsoluble solvents, characterised in that the waste water is heated before evaporation in a separate stage to a temperature between the boiling temperature of the solvent and 100 °C.

5. Process according to Claim 4 wherein steam jet ejectors are used to produce a vacuum, characterised in that the propellent steam of the steam jet ejectors (36) is conducted into the waste water.

6. Installation for executing one of the processes according to Claims 1 to 5,
- with a solvent remover for removing the solvent from the scrap,
- a device for condensing vapours containing solvents and
- a device for separating solvent and water,
characterised by a waste water evaporator (10) connected after the device (16) for separating solvent and water, and a steam line (8) which leads from the waste water evaporator (10) into the solvent remover (5).

7. Installation according to Claim 6, characterised by a residue conveying section (9) from the waste water evaporator (10) to the solvent remover (5).

8. Installation according to Claim 6 or 7, characterised by a waste water evaporator (10) heated indirectly with steam.

9. Installation according to one of Claims 6 to 8, characterised by a post-separation evaporator (20) between the solvent/water separating device (16) and waste water evaporator (10).

## Revendications

1. Procédé d'extraction de solides par des solvants organiques, sans obtention d'eaux résiduaires, dans lequel le solvant est entraîné par contact direct avec de la vapeur d'eau hors du résidu solide de l'extraction, le tourteau, et dans lequel des vapeurs contenant de l'eau et du solvant sont condensées, le solvant étant séparé du condensat, caractérisé en ce que les eaux résiduaires subsistant après la séparation du solvant sont évaporées et en ce que la vapeur d'eau est utilisée pour l'entraînement du solvant hors du tourteau.

2. Procédé suivant la revendication 1, caractérisé en ce que les eaux résiduaires sont, à l'exception de 0,4 à 1 % en poids, évaporées et en ce que le résidu d'évaporation est ajouté au tourteau pendant le traitement à la vapeur d'eau.

3. Procédé suivant l'une des revendications 1 et 2, caractérisé en ce que l'évaporation est effectuée par un transfert indirect de chaleur depuis de la vapeur d'eau fraîche.

4. Procédé suivant l'une des revendications 1 à 3, avec des solvants insolubles dans l'eau, caractérisé en ce que les eaux résiduaires sont, avant l'évaporation, chauffées dans une étape séparée à une température comprise entre la température d'ébullition du solvant et 100 °C.

5. Procédé suivant la revendication 4, dans lequel des éjecteurs à jets de vapeur d'eau sont mis en œuvre pour la production de vide, caractérisé en ce que la vapeur d'eau propulsée des éjecteurs (36) est introduite dans les eaux résiduaires.

6. Installation pour la mise en œuvre d'un des procédés suivant l'une des revendications 1 à 5, comprenant un dispositif d'entraînement de solvant pour entraîner le solvant hors du tourteau, un dispositif de condensation des vapeurs contenant du solvant et un dispositif de séparation du solvant et de l'eau, caractérisée par un évaporateur d'eaux résiduaires (10) monté en aval du dispositif (16) de séparation du solvant et de l'eau et par un conduit à vapeur d'eau (8), qui conduit de l'évaporateur d'eaux résiduaires (10) dans le dispositif d'entraînement du solvant (5).

7. Installation suivant la revendication 6, caractérisée par une voie de transport de résidu (9) allant de l'évaporateur d'eaux résiduaires (10) vers le dispositif d'entraînement de solvant (5).

8. Installation suivant l'une des revendications 6 et 7, caractérisée par un évaporateur d'eaux résiduaires (10) chauffé par voie indirecte par de la vapeur d'eau.

9. Installation suivant l'une des revendications 6 à 8, caractérisée par un évaporateur séparateur ultérieur (20) entre le dispositif de séparation de solvant/eau (16) et l'évaporateur d'eaux résiduaires (10).

Fig.1